# FASCICULE DE BREVET EUROPEEN

(11) **EP 0 435 706 B1**
(45) Date de publication et mention de la délivrance du brevet: **26.01.1994**
(21) Numéro de dépôt: 90403200.0
(22) Date de dépôt: 12.11.1990
(51) Int. Cl.: F16C 7/02

(54) **Bielle en materiau composite**
Pleuelstange aus Verbundwerkstoff
Connecting rod made of composite material

(30) Priorité: 13.11.1989 FR 8914862
(43) Date de publication de la demande: 03.07.1991
(73) Titulaire: SOCIETE EUROPEENNE DE PROPULSION, 92150 Suresnes (FR)
(72) Inventeur: Maumus, Jean-Pierre, F-33150 Cenon (FR)
(74) Mandataire: Joly, Jean-Jacques

(56) Documents cités:
- DE-A- 3 207 573
- DE-A- 3 416 011
- FR-A- 2 284 819
- GB-A- 2 171 489

## Description

La présente invention concerne une bielle en matériau composite.

En raison des gains de poids qu'ils procurent, de leur tenue aux efforts mécaniques, de leur résistance à la corrosion, de leur comportement sans cesse amélioré aux températures élevées et de leur facilité de mise en oeuvre, les matériaux composites trouvent des applications de plus en plus nombreuses. En particulier, leur utilisation a été proposée, ou est même devenue effective, pour des organes de transmission habituellement réalisés en métal.

Il a ainsi été proposé, notamment dans le document DE-A-3 207 573, de réaliser des bielles en matériau composite, en particulier des bielles précontraintes dont le pied et la tête sont constamment précontraints par un bobinage, ou sangle, qui les relient, le corps central de la bielle reprenant les efforts de compression.

La présente invention a pour but de fournir une bielle en matériau composite qui, tout en ayant une architecture adaptée aux sollicitations auxquelles elle est soumise, puisse être facilement montée et démontée.

Ce but est atteint grâce à une bielle comprenant :
- un corps central réalisé en un matériau composite apte à reprendre les efforts de compression,
- un pied de bielle en matériau composite fixé à une première extrémité du corps central et relié à celui-ci par une sangle prenant appui sur le pied de bielle et sur le corps central,
- une tête de bielle en matériau composite formée par une demi-tête fixée à une deuxième extrémité du corps central, et par un chapeau appliqué sur la demi-tête de bielle au moyen d'une sangle qui prend appui sur le chapeau et sur le corps central, et qui est associée à
- des moyens de précontrainte de la sangle,

bielle dans laquelle, conformément à l'invention :
- le corps central est réalisé en un matériau composite apte à reprendre les efforts de traction et de compression,
- le pied de bielle est relié au corps central par une première sangle prenant appui sur la première extrémité du corps central,
- la tête de bielle est reliée au corps central par une deuxième sangle prenant appui sur le chapeau et sur la deuxième extrémité du corps central, et
- des moyens de précontrainte de la deuxième sangle sont prévus.

Par rapport à une bielle dans laquelle la tête et le pied sont précontraints par un bobinage qui les relient l'un à l'autre, la bielle conforme à l'invention présente plusieurs avantages.

Ainsi, la précontrainte de la deuxième sangle n'écrase pas le pied et la tête de bielle. Cette précontrainte peut en outre être mieux maîtrisée puisque l'élasticité du corps central n'entre pas en compte.

De plus, des problèmes provenant d'une différence de dilatation entre le corps central et le bobinage reliant le pied de bielle à la tête de bielle ne se posent plus.

Le corps central de la bielle est avantageusement creux avec une ouverture qui s'étend dans la direction longitudinale de la bielle et débouche de chaque côté du corps central.

Les sangles reliant le corps central respectivement au pied de bielle et au chapeau de la tête de bielle peuvent alors passer à travers l'ouverture du corps central, à chaque extrémité de celui-ci, en prenant appui sur les fonds de l'ouverture.

Les sangles sont formées par exemple par bobinage d'un ruban qui peut être lui-même en un matériau composite.

La précontrainte de la deuxième sangle reliant le chapeau de la tête de bielle au corps central est réalisée par tout moyen approprié qui permet un montage et un démontage aisés.

L'invention sera mieux comprise à la lecture de la description faite ci-après, à titre indicatif mais non limitatif, en référence aux dessins annexés sur lesquels :
- la figure 1 est une vue schématique en perspective, et en coupe d'une bielle en matériau composite conforme à l'invention,
- la figure 2 est une vue en élévation de face et en coupe de la bielle de la figure 1;
- la figure 3 est une vue de dessous de la bielle de la figure 1, et
- les figures 4 à 7 sont des vues en élévation et en coupe, ou à demi en coupe, de bielles conformes à l'invention avec différents moyens de précontrainte de la sangle reliant la tête de la bielle au corps central de celle-ci.

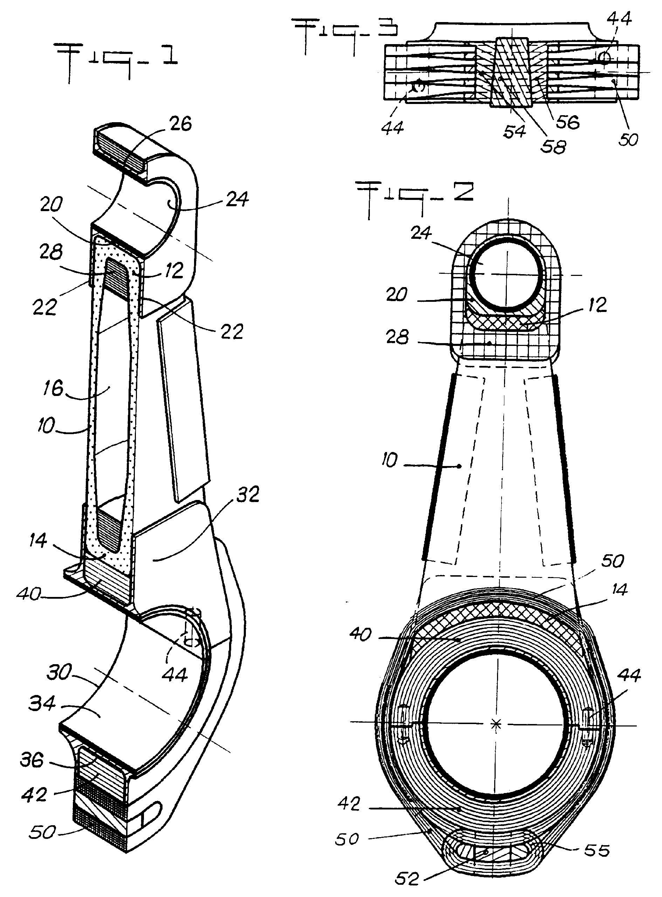

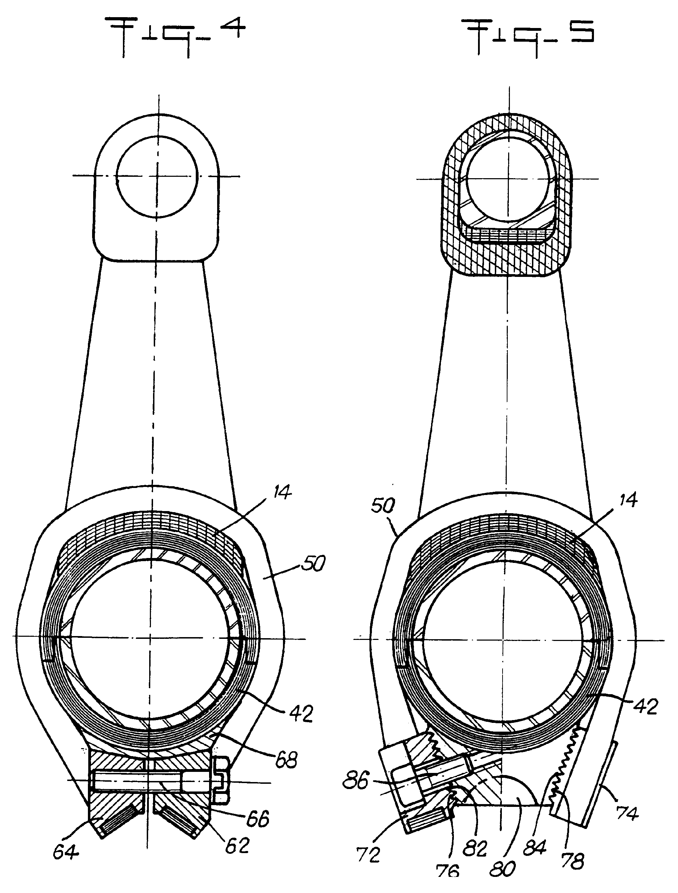

La bielle illustrée par les figures 1 à 3 comprend un corps central 10, un pied de bielle 20 relié à une extrémité 12 du corps central par une sangle 28, et une tête de bielle 30 comprenant une demi-tête 40 fixée à l'autre extrémité 14 du corps central et un chapeau 42 fixé au corps central au moyen d'une sangle précontrainte 50.

Le corps central 10 présente une forme creuse avec une ouverture longitudinale 16 qui s'étend entre les extrémités 12 et 14 et débouche de chaque côté du corps 10.

Le corps central 10 est réalisé en un matériau composite apte à reprendre les efforts de traction et de compression, tel que, par exemple, un matériau ayant une texture de renfort constituée par des fibres de carbone densifiée par une matrice en résine, par exemple en résine epoxyde.

D'autres matériaux composites pourraient être utilisés pour réaliser le corps central, en particulier des matériaux dont la texture de renfort est constituée par des fibres ou des tissus en une matière choisie parmi des verres ou des carbones haut module ou haute résistance, et dont la matrice est constituée d'une matière choisie parmi des PSP, polyimides, résines thermoplastiques, etc.

Le pied de bielle 20 présente des flancs 22 qui constituent les faces du pied de bielle, où débouche l'alésage central 24 de celui-ci, et qui forment entre eux une gorge 26. Dans sa partie adjacente au corps central 10, le pied de bielle 20 s'adapte sur l'extrémité 12 de celui-ci, les flancs 22 venant sur chaque face du corps central et la gorge 26 épousant la forme de l'extrémité 12.

Le pied de bielle 20 est réalisé en matériau composite de même nature qui celui constituant le corps central 10.

La liaison entre le pied de bielle 20 et le corps central est réalisée par collage, par exemple au moyen d'une colle de type époxy, PSP ou polyimide, complété par la sangle 28.

La sangle 28 est constituée par bobinage d'un fil en carbone haut module imprégné de résine époxyde. Le fil est bobiné autour du pied de bielle 20, en passant dans la gorge 26, et autour de l'extrémité 12 du corps central, en passant dans l'ouverture 16, celle-ci donnant à l'extrémité 12 du corps central une section en forme de U. La sangle 28 n'a pas pour seule fonction d'assurer la liaison entre le pied de bielle 20 et le corps central 10; elle participe également à la rigidification du pied de bielle 20.

De la même façon que le pied 10, la tête de bielle 30 présente des flancs 32 qui constituent les faces de la tête de bielle, où débouche l'alésage central 34 de celle-ci, et qui forment entre eux une gorge 36.

Dans sa partie adjacente au corps central 10, la demi-tête de bielle 40 s'adapte sur l'extrémité 14 de celui-ci, les flancs 32 venant sur chaque face du corps central et la gorge 36 épousant la forme de l'extrémité 14.

Le chapeau 42 est raccordé à la demi-tête 40 en utilisant des pions de positionnement 44 qui traversent leur plan de raccordement. La demi-tête 40 et le chapeau 42 sont réalisés en un matériau composite de même nature que celui constituant le corps central 10.

La liaison entre la tête de bielle 30 et le corps central 10 est réalisée par collage de la demi-tête 40 sur l'extrémité 14, complété par la sangle 50.

La sangle 50 est constituée par bobinage d'un fil de "Kevlar". Le fil est bobiné séparément, ou, in situ, autour de la tête de bielle, en passant dans la gorge 36, et autour de l'extrémité 14 du corps central, en passant à travers l'ouverture 16 qui donne à l'extrémité 14 une section en forme de U.

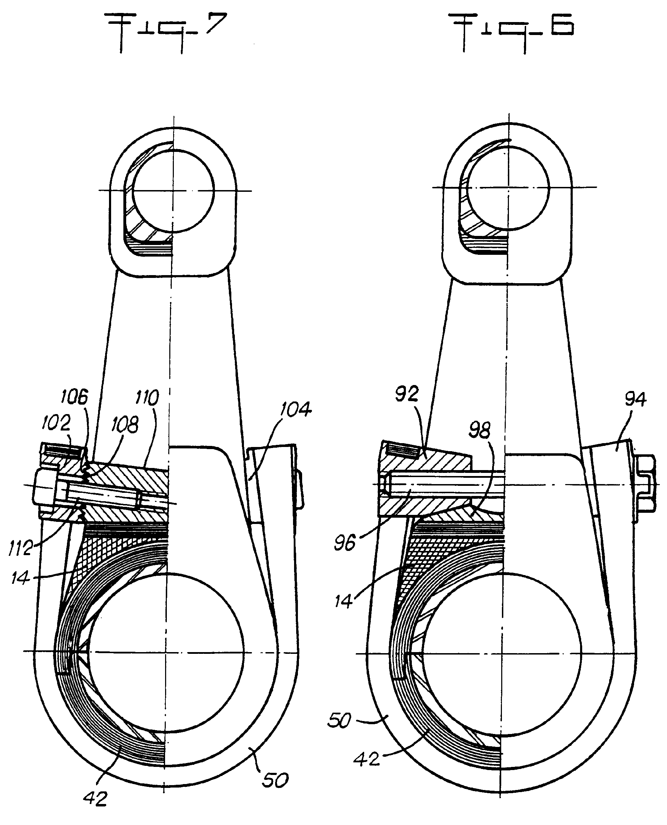

La sangle 50 est précontrainte au moyen d'un dispositif de précontrainte 52. Celui-ci est constitué par un noyau expansible disposé à l'extrémité de la tête de bielle. Lors de son bobinage, le ruban constituant la sangle 50 passe autour du noyau 52 en formant une boucle 55. Comme le montre la figure 3, le noyau 52 est constitué de deux pièces latérales 54, 56 entre lesquelles est disposée une pièce centrale 58 en forme de coin. Les pièces 54, 56 ont des faces en regard formant des rampes inclinées qui coopèrent avec le coin 58 pour permettre la mise en précontrainte de la sangle par écartement mutuel des pièces 54 et 56 provoquant une expansion contrôlée du noyau 52.

La précontrainte de la sangle 50 permet une transmission des efforts de traction au corps central 10, sans déformation de la tête de bielle. Les efforts de compression sont également repris par le corps central 10. Le démontage de la bielle est facilement réalisé en supprimant la contrainte dans la sangle 50 par retrait du coin 58, et par retrait de la sangle 50. La bielle peut ensuite être tout aussi facilement remontée.

D'autres formes de réalisation du dispositif de précontrainte de la sangle 50 peuvent être envisagées, tout en préservant la possibilité d'un montage et d'un démontage aisés de la bielle.

Les bielles montrées par les figures 4 à 7 diffèrent de celle illustrée par la figure 1 essentiellement dans la réalisation de la sangle 50 et du moyen de précontrainte de celle-ci.

Dans le cas de la figure 4, la sangle 50 a une forme de collier de serrage muni de pièces d'extrémité 62, 64 qui sont reliées l'une à l'autre par une vis 66. Une cale 68 est disposée à l'extrémité du chapeau 42. Du côté adjacent au chapeau, la cale 68 présente une face dont la forme épouse celle du chapeau 42. Du côté opposé, la cale 68 présente deux rampes sur lesquelles s'appuient les pièces 62, 64 pour permettre une précontrainte de la sangle 50 par serrage de la vis 66, la sangle 50 s'appuyant directement sur l'extrémité 14 du corps central 10 en passant à travers l'ouverture 16.

La figure 5 montre également une sangle 50 en forme de collier de serrage muni de pièces d'extrémité 72, 74. Les pièces 72, 74 ont des faces comprenant des dentures 76, 78 qui coopèrent avec des dentures correspondantes 82, 84 formées sur deux côtés opposés d'une pièce 80. Cette dernière s'appuie par sa base sur la face externe du chapeau 42, la face de la pièce 80 adjacente au chapeau épousant la forme de celui-ci, tandis que les côtés munis des dentures 82, 84 sont inclinés l'un vers l'autre à partir de la base de la pièce 80. Lorsque la précontrainte désirée a été appliquée à la sangle 50, par positionnement relatif des dentures des pièces 72, 74 et de celles de la pièce 80, le blocage de la sangle 50 est réalisé au moins au moyen d'une vis 86 immobilisant l'une des pièces 72, 74 sur la pièce 80.

Dans le cas des figures 4 et 5, la sangle prend directement appui sur l'extrémité 14 du corps central 10, en passant dans l'ouverture 16, la liaison entre les extrémités de la sangle étant réalisée à l'extrémité de la bielle en prenant appui sur le chapeau.

Inversement, la sangle 50 peut être disposée de manière à prendre directement appui sur le chapeau 42, la liaison entre les extrémités de la sangle étant réalisée au niveau de l'extrémité 14 du corps central 10.

Ainsi, la figure 6 montre une sangle 50 qui passe autour du chapeau 42 et qui est munie de pièces d'extrémité 92, 94 reliées l'une à l'autre par une vis 96 traversant l'ouverture 16. Une cale 98 est disposée à l'intérieur de l'ouverture 16 en appui sur l'extrémité 14. La face de la cale 98 en contact avec le corps central épouse la forme de celui-ci, au fond de l'ouverture 16, tandis que la face opposée de la cale 98 présente deux rampes sur lesquelles s'appuient les pièces d'extrémité 92, 94. Une précontrainte de la sangle 50 est obtenue par serrage de la vis 96, ce qui a pour effet de faire glisser les pièces 92, 94 sur les rampes de la cale 98.

Enfin, la figure 7 montre une sangle 50 qui passe autour du chapeau 42 et qui est munie de pièces d'extrémité 102, 104. Celles-ci ont des dentures 106 qui coopèrent avec des dentures correspondantes 108 formées sur deux côtés d'une pièce 110. Cette dernière s'appuie par sa base sur l'extrémité 14 du corps central, au fond de l'ouverture 16, tandis que les côtés munis des dentures 108 sont inclinés l'un vers l'autre à partir de la base. Lorsque les dentures 106 ont été engagées sur les dentures 108 pour atteindre le degré de tension désiré dans la sangle 50, celle-ci est bloquée au moins au moyen d'une vis 112 immobilisant l'une des pièces d'extrémité 102, 104 sur la pièce 110.

## Revendications

1. Bielle en matériau composite, comportant :
- un corps central (10) réalisé en un matériau composite apte à reprendre les efforts de compression,
- un pied de bielle (20) en matériau composite fixé à une première extrémité du corps central (10) et relié à celui-ci par une sangle (28) prenant appui sur le pied de bielle et sur le corps central (10),
- une tête de bielle (30) en matériau composite formée par une demi-tête (40) fixée à une deuxième extrémité du corps central (10), et par un chapeau (42) appliqué sur la demi-tête de bielle au moyen d'une sangle (50) qui prend appui sur le chapeau (42) et sur le corps central (10), et qui est associée à des moyens de précontrainte de la sangle (50),
caractérisée en ce que :
- le corps central (10) est réalisé en un matériau composite apte à reprendre les efforts de traction et de compression,
- le pied de bielle (20) est relié au corps central (10) par une première sangle (28) prenant appui sur la première extrémité du corps central (10),
- la tête de bielle (30) est reliée au corps central (10) par une deuxième sangle (50) prenant appui sur le chapeau (42) et sur la deuxième extrémité du corps central (10), et
- des moyens de précontrainte de la deuxième sangle (50) sont prévus.

2. Bielle selon la revendication 1, caractérisée en ce que le corps central (10) est creux et présente une ouverture (16) qui s'étend en direction longitudinale entre la première et la deuxième extrémité et débouche de chaque côté du corps central.

3. Bielle selon l'une quelconque des revendications 1 et 2, caractérisée en ce que la première sangle (28) est réalisée par bobinage autour du pied de bielle (20) et de la première extrémité (12) du corps central (10).

4. Bielle selon les revendications 2 et 3, caractérisée en ce que la première sangle (28) est bobinée autour de la première extrémité (12) du corps central (10) en passant à travers l'ouverture (16) de celui-ci et en s'appuyant sur le fond de l'ouverture, du côté de la première extrémité.

5. Bielle selon l'une quelconque des revendications 1 à 4, caractérisée en ce que la deuxième sangle (50) est réalisée par bobinage autour de la tête de bielle (30) et de la deuxième extrémité (14) du corps central (10).

6. Bielle selon les revendications 2 et 5, caractérisée en ce que la deuxième sangle (50) est bobinée autour de la deuxième extrémité (14) du corps central (10) en passant à travers l'ouverture (16) de celui-ci et en s'appuyant sur le fond de l'ouverture, du côté de la deuxième extrémité.

7. Bielle selon la revendication 6, caractérisée en ce que la deuxième sangle (50) est bobinée en formant une boucle autour d'un noyau expansible (52) destiné à mettre la deuxième sangle en précontrainte.

8. Bielle selon l'une quelconque des revendications 1 à 5, caractérisée en ce que la deuxième sangle (50) est munie de deux pièces d'extrémité reliées à un dispositif de tension destiné à mettre la deuxième sangle en précontrainte.

9. Bielle selon l'une quelconque des revendications 1 à 8, caractérisée en ce que le matériau composite constitutif du corps central (10), du pied de bielle (20) et de la tête de bielle (30) est un matériau ayant une texture de renfort constituée par des fibres choisies parmi les fibres de carbone et les fibres de verre, et densifiée par une matrice en résine.

10. Bielle selon l'une quelconque des revendications 1 à 9, caractérisée en ce que les sangles (28, 50) reliant le pied de bielle et la tête de bielle au corps central sont réalisées par bobinage d'un fil.

## Patentansprüche

1. Pleuelstange aus Verbundwerkstoff, bestehend aus:
- einem zentralen Körper (10), der aus einem Verbundwerkstoff hergestellt ist, der in der Lage ist, die Durckkräfte aufzunehmen,
- einem Pleuelstangenfuß (20) aus einem Verbundwerkstoff, der an einem ersten Ende des zentralen Körpers (10) befestigt und mit diesem durch einen Gurt (28) verbunden ist, der am Fuß der Pleuelstange und am zentralen Körper (10) anliegt,
- einem Pleuelstangenkopf (30) aus einem Verbundwerkstoff, der aus einem Halbkopf (40), der an einem zweiten Ende des zentralen Körlpers (10) befestigt ist, und aus einer Abdeckung (42), die auf den Halbkopf der Pleuelstange mittels eines Gurtes (50) aufgebracht ist, der auf der Abdeckung (42) und dem zentralen Körper (10) aufliegt, gebildet und der Vorspannungseinrichtungen des Gurtes (50) zugeordnet ist,
dadurch gekennzeichnet, daß:
- der znetrale Körper (10) aus einem Verbundwerkstoff besteht, der in der Lage ist, die Zug- und Druckkräfte aufzunehmen,
- der Fuß der Pleuelstange (20) mit dem zentralen Körper (10) durch einen ersten Gurt (28) verbunden ist, der am ersten Ende des zentralen Körpers (10) anliegt,
- der Kopf der Pleuelstange (30) mit dem zentralen Körper (10) durch einen zweiten Gurt (50) verbunden ist, der auf der Abdeckung (42) und auf dem zweiten Ende des zentralen Körpers (10) aufliegt, und
- Einrichtungen zum Vorspannen des zweiten Gurtes (50) vorgesehen sind.

2. Pleuelstange nach Anspruch 1, dadurch gekennzeichnet, daß der zentrale Körper (10) hohl ist und eine Öffnung (16) aufweist, die sich in Längsrichtung zwischen dem ersten und dem zweiten Ende erstreckt und auf jeder Seite des zentralen Körpers mündet.

3. Pleuelstange nach einem der Ansprüche 1 und 2, dadurch gekennzeichnet, daß der erste Gurt (28) aus einer Wicklung um den Fuß der Pleuelstange (20) und das erste Ende (12) des zentralen Körpers (10) besteht.

4. Pleuelstange nach den Ansprüchen 2 und 3, dadurch gekennzeichnet, daß der erste Gurt (28) um das erste Ende (12) des zentralen Körpers (10) gewickelt ist, die durch dessen Öffnung (16) verläuft und am Boden der Öffnung auf der Seite des ersten Endes anliegt.

5. Pleuelstange nach einem der Ansprüche 1 bis 4, dadurch gekennzeichnet, daß der zweite Gurt (50) aus einer Wicklung um den Kopf der Pleuelstange (30) und das zweite Ende (14) des zentralen Körpers (10) besteht.

6. Pleuelstange nach den Ansprüchen 2 und 5, dadurch gekennzeichnet, daß der zweite Gurt (50) um das zweite Ende (14) des zentralen Körpers (10) gewickelt ist, durch dessen Öffnung (16) verläuft und am Boden der Öffnung auf der Seite des zweiten Endes anliegt.

7. Pleuelstange nach Anspruch 6, dadurch gekennzeichnet, daß der zweite Gurt (50) gewickelt ist und eine Schlaufe um einen expansiblen Kern (52) bildet, der dazu bestimmt ist, den zweiten Gurt vorzuspannen.

8. Pleuelstange nach einem der Ansprüche 1 bis 5, dadurch gekennzeichnet, daß der zweite Gurt (50) mit zwei Endstücken versehen ist, die mit einer Spannungsvorrichtung verbunden ist, die dazu bestimmt ist, den zweiten Gurt vorzuspannen.

9. Pleuelstange nach einem der Ansprüche 1 bis 8, dadurch gekennzeichnet, daß der Grund-Verbundwerkstoff des zentralen Körpers (10), des Fußes der Pleuelstange (20) und des pleuelstangenkopfes (30) aus einem Material besteht, das ein Verstärkungsstruktur hat, die aus Fasern besteht, die aus Kohlenstoff- und Glasfasern ausgewählt sind, und die durch eine Harzmatrix verdichtet ist.

10. Pleuelstange nach einem der Ansprüche 1 bis 9, dadurch gekennzeichnet, daß die Gurte (28, 50), die den Pleuelstangenfuß und -kopf mit dem zentralen Körper verbinden, durch Wickeln einer Faser gebildet sind.

## Claims

1. Connecting rod in composite material, comprising:
- a central body (10) in composite material and suitable for taking up compression forces,
- a little end (20) in composite material fixed to a first end of the central body (10) and connected thereto by a strap (28) bearing against the little end and against the central body (10),
- a big end (30) in composite material comprising an inner half (40) fixed to the second end of the central body (10) and an outer half (42) pressed against the inner half of the big end by means of a strap (50) bearing against said outer half (42) and against said central body (10), and being associated to strap pre-stressing means (50),
characterized in that:
- the central body (10) is made in a composite material suitable for taking up pulling and compression forces,
- the little end (20) is connected to the central body (10) by a first strap (28) bearing against the first end of the central body (10),
- the big end (30) is connected to the central body (10) by a second strap (50) bearing against the outer half (42) and against the second end of the central body (10), and
- means for pre-stressing the second strap (50) being provided.

2. Connecting rod according to claim 1, characterized in that the central body (10) is hollow and has an opening (16) which extends lengthwise between the first and second ends, and which opens out into each side of the central body.

3. Connecting rod according to any one of claims 1 and 2, characterized in that the first strap (28) is made by a winding passing round the little end (20) and the first end (12) of the central body (10).

4. Connecting rod according to claims 2 and 3, characterized in that the first strap (28) is wound around the first end (12) of the central body (10) by passing through the opening (16) thereof and by bearing against the bottom of the opening, on the side of the first end.

5. Connecting rod according to any one of claims 1 to 4, characterized in that the second strap (50) is constituted by a winding passing round the big end (30) and the second end (14) of the central body (10).

6. Connecting rod according to claims 2 and 5, characterized in that the second strap (50) is wound around the second end (14) of the central body (10) by passing through the opening (16) thereof and by bearing against the bottom of the opening, on the side of the second end.

7. Connecting rod according to claim 6, characterized in that the second strap (50) is wound to form a loop around an expandable core (52) designed to impart pre-stress to the second strap.

8. Connecting rod according to any one of claims 1 to 5, characterized in that the second strap (50) is provided with two endpieces which are connected to a tensioning device for imparting pre-stress to the second strap.

9. Connecting rod according to any one of claims 1 to 8, characterized in that the composite material constituting the central body (10), the little end (20), and the big end (30) is a material including reinforcement constituted by fibers selected from carbon fibers and glass fibers, and densified by a resin matrix.

10. Connecting rod according to any one of claims 1 to 9, characterized in that the straps (28, 50) connecting the big end and the little end to the central body are made by winding a thread.
